# EUROPEAN PATENT APPLICATION

(11) **EP 4 094 941 A1**
(43) Date of publication of application: **30.11.2022**
(21) Application number: 21757929.1
(22) Date of filing: 05.02.2021
(51) Int. Cl.: B32B 27/36, C09J 4/02

(54) **PROTECTIVE FILM AND PREPARATION METHOD THEREFOR, LAMINATING METHOD, AND TERMINAL**

(30) Priority: 17.02.2020 CN 202010097709; 20.03.2020 CN 202010206525
(71) Applicant: Huawei Technologies Co., Ltd., Shenzhen, Guangdong 518129, (CN)
(72) Inventor: PANG, Huan, Shenzhen, Guangdong 518129 (CN); HU, Chengwen, Shenzhen, Guangdong 518129 (CN); LI, Pengfei, Shenzhen, Guangdong 518129 (CN); ZHOU, Yujia, Shenzhen, Guangdong 518129 (CN); HUANG, Yihong, Shenzhen, Guangdong 518129 (CN)
(74) Representative: Maiwald GmbH
(86) International application number: PCT/CN2021/075534
(87) International publication number: WO 2021/164578

(57) **Abstract**

This application provides a protective film, configured to protect a screen of an electronic device. The protective film includes a polyurethane base film layer (11) and an adhesive layer (12). The polyurethane base film layer (11) has Shore hardness ranging from 45D to 75D, a glass transition temperature Tg ranging from 30°C to 70°C, and a heat deflection temperature T_{deflection} ranging from 50°C to 90°C, and Tg<T. Alternatively, the protective film includes a first polyurethane base film layer (21), an adhesive layer (22), and a UV semi-cured layer (23) disposed between the first polyurethane base film layer (21) and the adhesive layer (22). The first polyurethane base film layer has Shore hardness ranging from 45D to 75D and a glass transition temperature greater than or equal to 30°C. The protective film has high hardness and excellent scratch resistance. When being attached to a surface of the screen, the protective film of one of the two structures can be formed, through hot pressing or UV radiation, into a shape that matches the screen, so that the protective film can perfectly match a curved radian of a curved screen to form a close combination, without warping or bounce. In addition, this application further provides a production method for the protective film and a terminal that uses the protective film.

## Description

This application claims priority to Chinese Patent Application No. 202010097709.3, filed with the China National Intellectual Property Administration on February 17, 2020 and entitled "PROTECTIVE FILM, PRODUCTION METHOD FOR PROTECTIVE FILM, AND ELECTRONIC DEVICE", and this application claims priority to Chinese Patent Application No. 202010206525.6, filed with the China National Intellectual Property Administration on March 20, 2020 and entitled "PROTECTIVE FILM, PRODUCTION METHOD AND ATTACHMENT METHOD THEREFOR, AND TERMINAL", which are incorporated herein by reference in their entireties.

### TECHNICAL FIELD

This application relates to the field of display protective film technologies, and in particular, to a protective film, a production method and an attachment method therefor, and a terminal.

### BACKGROUND

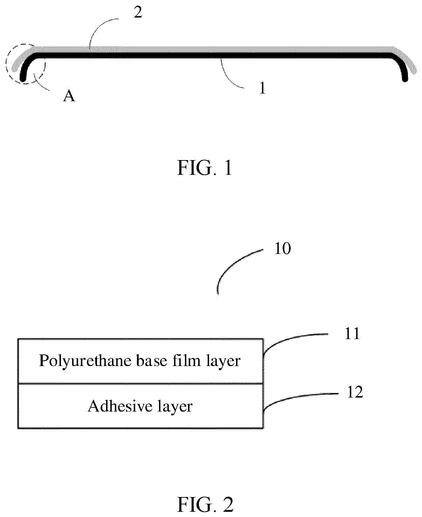

Use of curved displays in electronic products has become a popular trend currently, and the curved display continuously develops into a screen with a larger bending angle. To protect the curved display from external damage, in the industry, a protective film is generally attached to a surface of the curved display. However, as shown in FIG. 1, currently, a commonly used PET (Polyethylene terephthalate, polyethylene terephthalate) protective film 2 has relatively poor attachment performance due to relatively large hardness. When the protective film 2 is attached to a surface of a curved display 1, attachment bounce is easily generated at a corner (region A in FIG. 1) because the protective film 2 does not match a curvature. To alleviate the attachment bounce, inward retraction distance of the protective film needs to be enlarged, to avoid a curved region of the curved display. However, in this method, appearance refinement is affected, and most of the curved region is still exposed and is not protected. Currently, although a commonly used polyurethane protective film is soft and facilitates attachment, the polyurethane protective film has low hardness. In a use process of a consumer, a nail mark and a scratch easily occur. This seriously affects use experience. Therefore, it is necessary to develop a protective film with high hardness, excellent scratch resistance, and good attachment performance, to be attached to adapt to the curved display.

### SUMMARY

Embodiments of this application disclose a protective film. The protective film has high hardness and excellent scratch resistance, and when the protective film is attached to a surface of a screen, the protective film can be molded, through hot pressing or UV irradiation, into a shape that matches the screen, so that the protective film matches a curvature of a curved screen more perfectly, and is tightly bonded to the curved screen without warping and bounce.

A first aspect of the embodiments of this application discloses a protective film, configured to protect a screen of an electronic device, where the protective film includes a polyurethane base film layer and an adhesive layer disposed on one side of the polyurethane base film layer;
the polyurethane base film layer has Shore hardness falling within a range of 45D to 75D, a glass transition temperature Tg falling within a range of 30°C to 70°C, and a heat deflection temperature T_{deflection} falling within a range of 50°C to 90°C, and Tg<T_{deflection}; and
the adhesive layer is configured to be adhered to the screen of the electronic device.

In an implementation of this application, a Young's modulus of the polyurethane base film layer falls within a range of 500 Mpa to 3 Gpa.

In an implementation of this application, the protective film is of a planar structure.

In an implementation of this application, the polyurethane base film layer is a polyurethane acrylate film layer or a thermoplastic polyurethane film layer.

In an implementation of this application, a thickness of the polyurethane base film layer is 30 µm to 200 µm.

In an implementation of this application, the adhesive layer is silicone adhesive or acrylate adhesive.

In an implementation of this application, a thickness of the adhesive layer is 10 µm to 50 µm.

In an implementation of this application, when a peel angle is 180°, peel strength of the adhesive layer is greater than 800 gf/25 mm

In an implementation of this application, the protective film further includes a dirt-resistant self-repair layer, and the dirt-resistant self-repair layer is disposed on a side that is of the polyurethane base film layer and that is far away from the adhesive layer.

In an implementation of this application, the dirt-resistant self-repair layer is a polyurethane coating doped with a fluoroether auxiliary and/or a fluorocarbon auxiliary, or a polyurethane acrylate coating doped with a fluoroether auxiliary and/or a fluorocarbon auxiliary.

In an implementation of this application, a thickness of the dirt-resistant self-repair layer is 5 µm to 40 µm.

In an implementation of this application, pencil hardness of the dirt-resistant self-repair layer at a load of 500 g is greater than or equal to 1H, and a contact angle of the dirt-resistant self-repair layer is greater than or equal to 90°.

In an implementation of this application, a Young's modulus of the dirt-resistant self-repair layer is less than the Young's modulus of the polyurethane base film layer.

In an implementation of this application, the protective film further includes a base coating disposed between the polyurethane base film layer and the adhesive layer, and the base coating is a silane-modified polyurethane acrylate coating.

In an implementation of this application, the protective film further includes a lower release layer, and the lower release layer is disposed on a surface of a side that is of the adhesive layer and that is far away from the polyurethane base film layer.

In an implementation of this application, the protective film further includes an upper protective layer, and the upper protective layer is located on the side that is of the polyurethane base film layer and that is far away from the adhesive layer.

A second aspect of the embodiments of this application provides a production method for a protective film, including:
providing or producing a polyurethane base film, where the polyurethane base film has Shore hardness falling within a range of 45D to 75D, a glass transition temperature Tg falling within a range of 30°C to 70°C, and a heat deflection temperature T_{deflection} falling within a range of 50°C to 90°C, and Tg<T_{deflection}; and
producing an adhesive layer on a surface of one side of the polyurethane base film.

In an implementation of this application, the production method further includes: producing a dirt-resistant self-repair layer on a surface of another side of the polyurethane base film.

A third aspect of the embodiments of this application provides an attachment method for a protective film, including:
attaching the protective film according to the first aspect of the embodiments of this application to a surface of a screen of an electronic device by using the adhesive layer, then heating to soften the protective film, and molding, through hot pressing by using a heated soft rubber mold, the protective film into a shape that matches the screen.

In an implementation of this application, a hot-pressing molding temperature is greater than a heat deflection temperature of the protective film, and the hot-pressing molding temperature falls within a range of 50°C to 90°C.

In an implementation of this application, in the hot-pressing molding process, hot-pressing holding duration is greater than 20s.

A fourth aspect of the embodiments of this application provides a protective film, configured to protect a screen of an electronic device, where the protective film includes a first polyurethane base film layer, an adhesive layer, and a UV semi-cured layer disposed between the first polyurethane base film layer and the adhesive layer; or
the protective film includes a first polyurethane base film layer, an adhesive layer, a UV semi-cured layer disposed between the first polyurethane base film layer and the adhesive layer, and a second polyurethane base film layer disposed between the adhesive layer and the UV semi-cured layer.

Each of the first polyurethane base film layer and the second polyurethane base film layer has Shore hardness falling within a range of 45D to 75D and a glass transition temperature Tg greater than or equal to 30°C.

The adhesive layer is configured to be adhered to the screen of the electronic device.

In an implementation of this application, a Young's modulus of each of the first polyurethane base film layer and the second polyurethane base film layer falls within a range of 500 Mpa to 3 Gpa.

In an implementation of this application, the protective film is of a planar structure.

In an implementation of this application, the first polyurethane base film layer and the second polyurethane base film layer each are a polyurethane acrylate film layer or a thermoplastic polyurethane film layer.

In an implementation of this application, a thickness of each of the first polyurethane base film layer and the second polyurethane base film layer is 15 µm to 150 µm.

In an implementation of this application, the UV semi-cured layer is a semi-cured polyurethane acrylate layer.

In an implementation of this application, the semi-cured polyurethane acrylate layer includes a polyurethane acrylate that includes a double bond.

In an implementation of this application, a thickness of the UV semi-cured layer falls within a range of 30 µm to 150 µm.

In an implementation of this application, the adhesive layer is silicone adhesive or acrylate adhesive.

In an implementation of this application, a thickness of the adhesive layer is 10 µm to 50 µm.

In an implementation of this application, when a peel angle is 180°, peel strength of the adhesive layer is greater than 800 gf/25 mm

In an implementation of this application, the protective film further includes a dirt-resistant self-repair layer, and the dirt-resistant self-repair layer is disposed on a side that is of the first polyurethane base film layer and that is far away from the adhesive layer.

In an implementation of this application, the dirt-resistant self-repair layer is a polyurethane coating doped with a fluoroether auxiliary and/or a fluorocarbon auxiliary, or a polyurethane acrylate coating doped with a fluoroether auxiliary and/or a fluorocarbon auxiliary.

In an implementation of this application, a thickness of the dirt-resistant self-repair layer is 5 µm to 40 µm.

In an implementation of this application, pencil hardness of the dirt-resistant self-repair layer at a load of 500 g is greater than or equal to 1H, and a contact angle of the dirt-resistant self-repair layer is greater than or equal to 90°.

In an implementation of this application, a Young's modulus of the dirt-resistant self-repair layer is less than the Young's modulus of the polyurethane base film layer.

In an implementation of this application, the protective film further includes a base coating disposed between the UV semi-cured layer and the adhesive layer or between the second polyurethane base film layer and the adhesive layer, and the base coating is a silane-modified polyurethane acrylate coating.

In an implementation of this application, the protective film further includes a lower release layer, and the lower release layer is disposed on a surface of a side that is of the adhesive layer and that is far away from the first polyurethane base film layer.

In an implementation of this application, light transmittance of the lower release layer in a wavelength range of 10 nm to 400 nm is less than 10%.

In an implementation of this application, the protective film further includes an upper protective layer, and the upper protective layer is located on the side that is of the first polyurethane base film layer and that is far away from the adhesive layer.

In an implementation of this application, light transmittance of the upper protective layer in the wavelength range of 10 nm to 400 nm is less than 10%.

An embodiment of this application further provides a production method for a protective film, where the production method includes:
producing a first polyurethane base film on a PET carrier film, where the first polyurethane base film has Shore hardness falling within a range of 45D to 75D and a glass transition temperature Tg falling within a range of 30°C to 70°C;
producing a UV semi-cured layer on a surface of one side of the first polyurethane base film; and
producing an adhesive layer at the UV semi-cured layer.

In an implementation of this application, the production method further includes: producing a dirt-resistant self-repair layer on a surface of a side that is of the first polyurethane base film and that is far away from the adhesive layer.

An embodiment of this application further provides a production method for a protective film, where the production method includes:
producing a first polyurethane base film layer on a PET carrier film, where the first polyurethane base film layer has Shore hardness falling within a range of 45D to 75D and a glass transition temperature Tg greater than or equal to 30°C;
producing a UV semi-cured layer on a surface of one side of the first polyurethane base film layer;
producing a second polyurethane base film at the UV semi-cured layer, where the second polyurethane base film layer has Shore hardness falling within a range of 45D to 75D and a glass transition temperature Tg greater than or equal to 30°C; and
producing an adhesive layer on the second polyurethane base film.

In an implementation of this application, the production method further includes: producing a dirt-resistant self-repair layer on a surface of a side that is of the first polyurethane base film and that is far away from the adhesive layer.

An embodiment of this application further provides an attachment method for a protective film, including:
in a yellow light working environment, attaching the protective film provided in the fourth aspect of the embodiments of this application to a surface of a screen of an electronic device by using the adhesive layer, and then curing and molding, through UV light irradiation, the protective film into a shape that matches the screen.

In an implementation of this application, energy of the UV light irradiation falls within a range of 1000 mj/cm² to 3000 mj/cm².

An embodiment of this application further provides a terminal, where the terminal includes a display and a protective film attached to the display, the protective film is the protective film according to the first aspect of the embodiments of this application or the protective film according to the fourth aspect of the embodiments of this application, and the protective film is attached to a surface of the display by using the adhesive layer. The display of the terminal may be a curved display, or may be a flat display. In an implementation of this application, the display includes cover glass, and the protective film is attached to a surface of the cover glass by using the adhesive layer. If the display is a 3D large-angle curved display, the protective film matches the cover glass.

An embodiment of this application further provides a terminal, where the terminal includes a display and a protective film attached to the display, the protective film includes an adhesive layer and a polyurethane base film layer disposed at the adhesive layer, the protective film is adhered to the display by using the adhesive layer, the polyurethane base film layer has Shore hardness falling within a range of 45D to 75D, a glass transition temperature Tg falling within a range of 30°C to 70°C, and a heat deflection temperature T_{deflection} falling within a range of 50°C to 90°C, and Tg<T_{deflection}.

An embodiment of this application further provides a terminal, where the terminal includes a display and a protective film attached to the display, the protective film includes an adhesive layer adhered to the display, a totally cured UV semi-cured layer disposed at the adhesive layer, and a first polyurethane base film layer disposed at the totally cured UV semi-cured layer, the totally cured UV semi-cured layer is a polyurethane acrylate layer, and each of the polyurethane acrylate layer and the first polyurethane base film layer has Shore hardness falling within a range of 45D to 75D and a glass transition temperature Tg greater than or equal to 30°C.

In an implementation of this application, the protective film further includes a second polyurethane base film layer disposed between the adhesive layer and the totally cured UV semi-cured layer, and the second polyurethane base film layer has Shore hardness falling within a range of 45D to 75D and a glass transition temperature Tg greater than or equal to 30°C.

When the protective film provided in the embodiments of this application is attached to the surface of the screen, the protective film can be molded to adapt to the shape of the screen. Therefore, the protective film can be perfectly attached to the 3D large-angle curved display, and is tightly bonded to the display without warping and bounce. The protective film provided in the embodiments of this application further has high hardness and excellent scratch resistance. This can improve user experience.

### BRIEF DESCRIPTION OF DRAWINGS

FIG. 1 is a schematic diagram of attachment bounce generated when an existing PET protective film is attached to a surface of a screen;
FIG. 2 is a schematic diagram of a structure of a cross section of a protective film according to an embodiment of this application;
FIG. 3 is a schematic diagram of a post hot-pressing attachment process according to an embodiment of this application;
FIG. 4 is a schematic diagram of a structure of a cross section of a protective film according to another embodiment of this application;
FIG. 5 is a schematic diagram of a production process of a protective film according to an embodiment of this application;
FIG. 6 is a schematic diagram of an attachment process of a protective film according to an embodiment of this application;
FIG. 7 is a schematic diagram of a structure of a cross section of a protective film according to still another embodiment of this application;
FIG. 8 is a schematic diagram of a structure of a cross section of a protective film according to still another embodiment of this application;
FIG. 9 is a schematic diagram of a structure of a cross section of a protective film according to still another embodiment of this application;
FIG. 10 is a schematic diagram of a structure of a cross section of a protective film according to still another embodiment of this application;
FIG. 11 is a schematic diagram of a production process of a protective film according to another embodiment of this application;
FIG. 12 is a schematic diagram of an attachment process of a protective film according to another embodiment of this application;
FIG. 13 is a schematic diagram of a structure of a terminal according to an embodiment of this application;
FIG. 14 is a schematic diagram of attaching a protective film to a surface of a curved display according to an embodiment of this application; and
FIG. 15, FIG. 16, and FIG. 17 are schematic diagrams of cross sections of a protective film attached to a surface of a display according to an embodiment of this application.

### DESCRIPTION OF EMBODIMENTS

The following describes embodiments of this application with reference to the accompanying drawings in embodiments of this application.

As shown in FIG. 2, an embodiment of this application provides a protective film 10, configured to be attached to a screen of an electronic device, to protect the screen from external damage. The screen of the electronic device may be specifically a display. The protective film 10 may be applied to 2D, 2.5D, and 3D displays, and may be applied to a 3D large-angle display. The protective film 10 includes a polyurethane base film layer 11 and an adhesive layer 12 disposed on one side of the polyurethane base film layer 11.

In an implementation of this application, the polyurethane base film layer 11 serves as a main material layer of the protective film, and may provide mechanical and optical performance for the protective film. The polyurethane base film layer 11 has relatively high hardness, a relatively high glass transition temperature Tg, and a relatively low heat deflection temperature T_{deflection}. The polyurethane base film layer 11 has the Shore hardness falling within a range of 45D to 75D, the glass transition temperature Tg falling within a range of 30°C to 70°C, and the heat deflection temperature T_{deflection} falling within a range of 50°C to 90°C, and Tg<T_{deflection}.

According to the protective film 10 provided in this embodiment of this application, the polyurethane base film layer 11 has relatively high hardness, and may provide a high abrasion resistance and high scratch resistance for a protective film layer. In addition, the polyurethane base film layer 11 has a relatively high glass transition temperature Tg to help obtain a film layer with relatively high hardness and relatively good scratch resistance, and has a relatively low heat deflection temperature T_{deflection} to enable the protective film to be applied to a post hot-pressing attachment process, so as to resolve an attachment bounce problem caused by increasing the hardness of the protective film. Therefore, the protective film has high hardness, excellent scratch resistance, and good attachment performance. Compared with a conventional protective film in the industry, the protective film 10 in this embodiment of this application may be attached to the 3D large-angle curved display without sacrificing hardness and scratch resistance experience of the protective film, and is tightly bonded to CG (cover glass, cover glass) of the display without bounce and warping, so that the protective film well protects a curved region of the display.

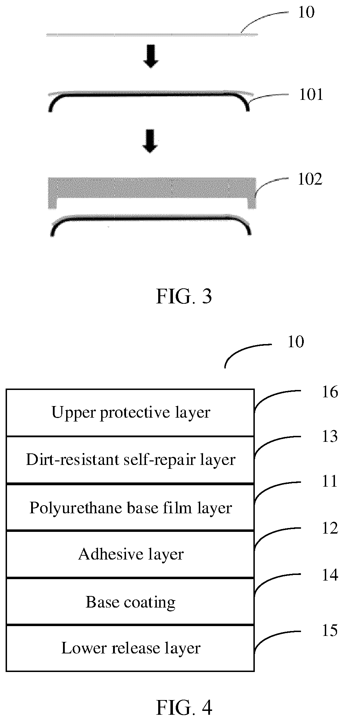

Specifically, in an implementation of this application, as shown in FIG. 3, the post hot-pressing attachment process is specifically as follows: First, the protective film 10 is attached to a surface of a screen 101; next, the protective film 10 is heated and softened; and subsequently, a profile hot-pressing soft rubber mold 102 is used as a "female mold", and a CG cover 101 of the screen is used as a "male mold", to mold the protective film 10 through hot pressing, so that the protective film 10 is perfectly attached to a surface of the CG cover 101. In the post hot-pressing attachment process, after the protective film is attached to the surface of the screen, the protective film is molded, through hot pressing, into a shape that matches the screen. Therefore, the protective film can be better bonded to the screen, to effectively avoid the following conventional-technology problem: When the protective film that is molded, through hot pressing in advance, into the shape that matches the screen is attached to the surface of the screen, attachment bounce is caused because the protective film does not match a curvature of the screen. In addition, an inward-retraction distance of the protective film relative to an edge of the screen can be reduced, and appearance refinement can be improved.

In an implementation of this application, the protective film 10 is of a planar structure, and is a planar protective film.

In an implementation of this application, when the protective film 10 is attached to the surface of the screen, a side of the adhesive layer 12 that is far away from the polyurethane base film layer 11 is adhered to the screen.

In an implementation of this application, the hardness of the polyurethane base film layer 11 may be obtained through test by using a Shore hardness tester, and the Shore hardness of the polyurethane base film layer 11 may alternatively fall within a range of 50D to 70D. The glass transition temperature may be obtained by performing a differential scanning calorimetry (Differential scanning calorimetry, DSC) test, and the glass transition temperature Tg may alternatively fall within a range of 40°C to 60°C. The heat deflection temperature T_{deflection} may pass an ISO 75-2 standard test, and the heat deflection temperature T_{deflection} may alternatively fall within a range of 50°C to 80°C. A relatively low heat deflection temperature helps ensure that the entire electronic device is tolerable to the post hot-pressing process.

In some implementations of this application, a Young's modulus of the polyurethane base film layer 11 falls within a range of 500 Mpa to 3 Gpa. In some other implementations of this application, the Young's modulus of the polyurethane base film layer 11 may fall within a range of 1 Gpa to 2 Gpa. When the Young's modulus is controlled to fall within a proper range, specific elasticity of the protective film can be ensured, and attachment bounce caused due to excessively large bounce stress generated because the protective film does not match the curvature during attachment can be effectively avoided.

In an implementation of this application, the polyurethane base film layer 11 may be a polyurethane acrylate (PUA, Polyurethane acrylate) film layer, or may be a thermoplastic polyurethane (TPU, Thermoplastic polyurethanes) film layer.

In some implementations of this application, the polyurethane base film layer 11 is a polyurethane acrylate film layer, and the polyurethane acrylate film layer may be molded through coating. Specifically, a raw material for producing the polyurethane acrylate film layer may include rigid isocyanate, resilient isocyanate, a polyol, hydroxyl acrylate, a photoinitiator, and a coupling reagent. The rigid isocyanate may improve hardness and a modulus of the PUA, and the resilient isocyanate may provide excellent resilience for the PUA base film. The polyol may provide resilience and ductility for the PUA base film. As a chain extender, the hydroxyl acrylate may adjust a cross-link density of the PUA base film, and control optical performance and a heat deflection temperature of the PUA base film.

The rigid isocyanate may include one or more of isophorone diisocyanate (IPDI), xylylene diisocyanate (XDI), methylcyclohexylene diisocyanate (HTDI), norbonyl diisocyanate (NBDI), 4,4-dicyclohexylmethane diisocyanate (H₁₂MDI), and tetramethylxylylene diisocyanate (TMXDI). The resilient isocyanate may include one or more of hexamethylene diisocyanate (HDI), trimethylhexamethylene diisocyanate (TMDI), and hydrogenated xylene diisocyanate (HXDI). The polyol may include one or more of a polyester polyol, a polycaprolactone polyol, and a polycarbonate diol. The hydroxyl acrylate may include one or more of hydroxyethyl acrylate, tripropylene glycol diacrylate, pentaerythritol diacrylate, trimethylolpropane triacrylate, and pentaerythritol triacrylate. The photoinitiator may include one or more of 2,4,6-trimethylbenzoyldiphenyl phosphine oxide, 2-methyl-1-[4-methylthiophenyl]-2-morpholino-1-acetone, 1-hydroxycyclohexyl phenyl ketone, 1-hydroxycyclohexyl phenyl ketone, 4-chlorobenzophenone, and methyl 2-benzoylbenzoate. The coupling reagent may include one or more of polymethylsiloxane, γ-methacryloxypropyltrimethoxylsilane, γ-aminopropyltrimethoxysilane, and γ-glycidoxypropyltrimethoxysilane.

In some other implementations of this application, the polyurethane base film layer 11 is a thermoplastic polyurethane film layer, and the thermoplastic polyurethane film layer may be molded through casting. Specifically, a raw material for producing the thermoplastic polyurethane film layer includes a thermoplastic polyurethane particle, an antioxidant, a hindered anime light stabilizer, and a plasticizer. The thermoplastic polyurethane particle may be synthesized from dicyclohexylmethane diisocyanate (H₁₂MDI), hexamethylene diisocyanate (HDI), a polycaprolactone polyol, and a chain extender.

In some implementations of this application, a thickness of the polyurethane base film layer 11 may be 30 µm to 200 µm. In some other implementations of this application, the thickness of the polyurethane base film layer 11 may be 50 µm to 120 µm. In some other implementations of this application, the thickness of the polyurethane base film layer 11 may be 80 µm to 100 µm.

In an implementation of this application, a material of the adhesive layer 12 is pressure sensitive adhesive, and may be specifically silicone adhesive or acrylate adhesive. In some implementations of this application, a thickness of the adhesive layer 12 may be 10 µm to 50 µm. In some implementations of this application, the thickness of the adhesive layer 12 may be 20 µm to 30 µm. When a peel angle is 180°, peel strength of the adhesive layer 12 is greater than 800 gf/25 mm

As shown in FIG. 4, in some implementations of this application, to provide dirt-resistance (low surface energy and a high contact angle) and self-repair (high resilience) performance for the protective film, the protective film 10 may further include a dirt-resistant self-repair layer 13 disposed on a side that is of the polyurethane base film layer 11 and that is far away from the adhesive layer 12. The dirt-resistant self-repair layer 13 may be a polyurethane (PU, polyurethane) coating doped with a fluoroether auxiliary and/or a fluorocarbon auxiliary, or may be a polyurethane acrylate (PUA) coating doped with a fluoroether auxiliary and/or a fluorocarbon auxiliary. The dirt-resistant self-repair layer 13 may be formed through light curing or hot curing after coating. A raw material for producing the polyurethane acrylate may include hexamethylene diisocyanate, a polyol, hydroxyl acrylate, a photoinitiator, and a coupling reagent. Selection of the fluoroether auxiliary and the fluorocarbon auxiliary is not limited. The fluoroether auxiliary and the fluorocarbon auxiliary may be an existing commonly-used anti-fingerprint and dirt-resistant material, and may be specifically one or more of fluorosilane, perfluoropolyether silane, perfluoropolyether alcohol, fluorocarbon silane, and fluorocarbon alcohol. In some implementations of this application, a thickness of the dirt-resistant self-repair layer 13 may be 5 µm to 40 µm. In some other implementations of this application, the thickness of the dirt-resistant self-repair layer 13 may be 10 µm to 30 µm, or may be 15 µm to 20 µm. The dirt-resistant self-repair layer 13 has Pencil hardness that is at a load of 500 g and that may be greater than or equal to 1H, and a contact angle that may be greater than or equal to 90°. In some implementations, the contact angle of the dirt-resistant self-repair layer 13 may be greater than or equal to 105°.

In an implementation of this application, a Young's modulus of the dirt-resistant self-repair layer 13 is less than the Young's modulus of the polyurethane base film layer 11, and has good resilience. Specifically, the Young's modulus of the dirt-resistant self-repair layer 13 may be 50 Mpa to 800 Mpa, or may be 100 Mpa to 600 Mpa.

In a specific implementation of this application, the dirt-resistant self-repair layer may be formed through UV curing by using hexamethylene diisocyanate, trimethylhexamethylene diisocyanate, a polycaprolactone polyol, fluorosilane, hydroxyethyl acrylate, and 2,4,6-trimethylbenzoyldiphenyl phosphine oxide. The hexamethylene diisocyanate is hexamethylene diisocyanate with high resilience, and the polycaprolactone polyol is selected as a polycaprolactone polyol with high flexibility.

As shown in FIG. 4, in some implementations of this application, to enhance adhesion of the protective film to the surface of the screen, a base coating 14 may be further disposed between the polyurethane base film layer 11 and the adhesive layer 12. The base coating 14 has a high cross-link density. The base coating 14 may be a silane-modified polyurethane acrylate coating, and a thickness thereof is 1 µm to 20 µm. Further, the thickness thereof may be 1 µm to 5 µm. A silane modifier may be but is not limited to methylsiloxane and methyltriacetylsilane. The silane modifier is chemically grafted on the polyurethane acrylate.

As shown in FIG. 4, in some implementations of this application, the protective film 10 further includes a lower release layer 15, and the lower release layer 15 is disposed on a surface of a side that is of the adhesive layer and that is far away from the polyurethane base film layer 11. A material of the lower release layer 15 may be PET or PP (Polypropylene, polypropylene), and a thickness thereof may fall within a range of 23 µm to 75 µm, or a thickness thereof may be 38 µm to 50 µm. An outwardly extending extension part is disposed at the lower release layer 15, and is configured to be peeled off the adhesive layer.

As shown in FIG. 4, in some implementations of this application, the protective film 10 further includes an upper protective layer 16, and the upper protective layer 16 is located on the side that is of the polyurethane base film layer 11 and that is far away from the adhesive layer 12. When the protective film 10 includes the dirt-resistant self-repair layer 13, the upper protective layer 16 is disposed on a surface of one side of the dirt-resistant self-repair layer 13. A material of the upper protective layer 16 may be PET or PP, and a thickness thereof may fall within a range of 23 µm to 75 µm, or a thickness thereof may be 38 µm to 50 µm. An outwardly extending extension part is disposed at the upper protective layer 16, to facilitate peel-off.

In an implementation of this application, a total thickness of the protective film 10 may be 70 µm to 300 µm.

In an implementation of this application, the protective film 10 may be produced in the following manner:
providing or producing a polyurethane base film (PU base film), where the polyurethane base film has Shore hardness falling within a range of 45D to 75D, a glass transition temperature Tg falling within a range of 30°C to 70°C, and a heat deflection temperature T_{deflection} falling within a range of 50°C to 90°C, and Tg<T_{deflection}; and
producing an adhesive layer on a surface of one side of the polyurethane base film.

In some implementations of this application, the production method further includes: producing a dirt-resistant self-repair layer on a surface of another side of the polyurethane base film. In an implementation of this application, the production method may further include: further producing another film layer structure based on a requirement. In some implementations of this application, the production method further includes: disposing an upper protective layer at the dirt-resistant self-repair layer, producing a base coating between the adhesive layer and the polyurethane base film layer, and disposing a lower release layer on a side that is of the adhesive layer and that is far away from the polyurethane base film layer.

In an implementation of this application, a method for producing the PU base film may be molding a PUA base film through coating or molding a TPU base film through casting. In an implementation of this application, the dirt-resistant self-repair layer may be produced through coating and curing by using dirt-resistant self-repair liquid. The dirt-resistant self-repair liquid includes fluoroether and/or fluorocarbon, and polyurethane or polyurethane acrylate. The raw material of the polyurethane acrylate may include hexamethylene diisocyanate, a polyol, hydroxyl acrylate, a photoinitiator, and a coupling reagent. Selection of the fluoroether and the fluorocarbon is not limited. The fluoroether and the fluorocarbon may be an existing commonly-used anti-fingerprint and dirt-resistant material, and may be specifically one or more of fluorosilane, perfluoropolyether silane, perfluoropolyether alcohol, fluorocarbon silane, and fluorocarbon alcohol.

In an implementation of this application, the adhesive layer may be produced through coating. In an implementation of this application, the base coating may be produced through coating by using base coating liquid. The base coating liquid may include a silane modifier, a polyurethane acrylate oligomer, a chain extender, a leveling agent, an initiator, and a solvent. The solvent may be a combination of one or more of isopropanol, ethanol, ethyl acetate, butyl acetate, toluene, xylene, butanone, and methyl isobutyl ketone.

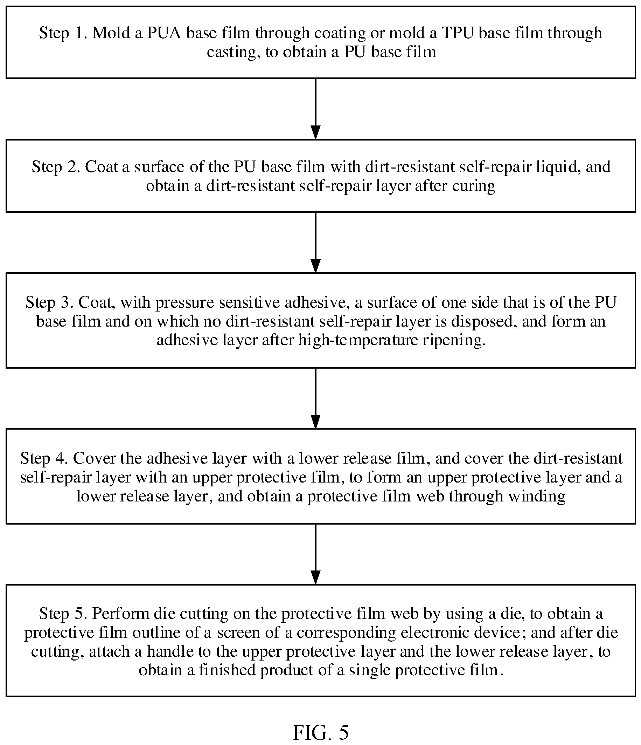

As shown in FIG. 5, in a specific implementation of this application, the protective film 10 may be produced in the following manner:
Step 1. Mold a PUA base film through coating or mold a TPU base film through casting, to obtain a PU base film.
Step 2. Coat a surface of the PU base film with dirt-resistant self-repair liquid, and obtain a dirt-resistant self-repair layer after curing.
Step 3. Coat, with pressure sensitive adhesive, a surface of one side that is of the PU base film and on which no dirt-resistant self-repair layer is disposed, and form an adhesive layer after high-temperature ripening.
Step 4. Cover the adhesive layer with a lower release film, and cover the dirt-resistant self-repair layer with an upper protective film, to form an upper protective layer and a lower release layer, and obtain a protective film web through winding.
Step 5. Perform die cutting on the protective film web by using a die, to obtain a protective film outline of a screen of a corresponding electronic device; and after die cutting, attach a handle to the upper protective layer and the lower release layer, to obtain a finished product of a single protective film.

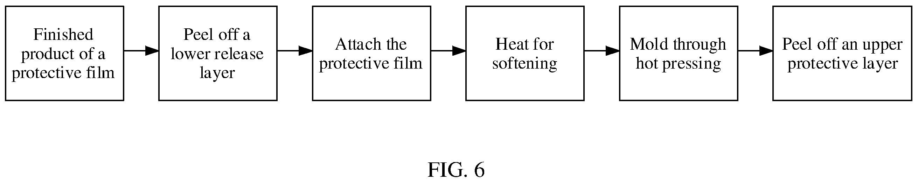

Correspondingly, as shown in FIG. 6, an embodiment of this application further provides an attachment method for the foregoing protective film, including:
attaching the protective film to a surface of a screen of an electronic device by using the adhesive layer, then heating to soften the protective film, and molding, through hot pressing by using a heated soft rubber mold, the protective film into a shape that matches the screen.

In an implementation of this application, in a hot-pressing molding process of the attachment method, a hot-pressing molding temperature is greater than a heat deflection temperature of the protective film, the hot-pressing molding temperature falls within a range of 50°C to 90°C, and hot-pressing holding duration is greater than 20s, and may be specifically, for example, 30s to 90s. In this embodiment of this application, the protective film has a relatively low heat deflection temperature. Therefore, the hot-pressing molding temperature may be correspondingly controlled to be a relatively low temperature, so that it can be ensured that the entire electronic device is tolerable to the hot-pressing process.

An operation of attaching the protective film to the surface of the screen of the electronic device by using the adhesive layer may be completed by using a film attachment fixture or device. The soft rubber mold used for hot-pressing molding is a profile soft rubber mold, and a side that is of the profile soft rubber mold and on which the profile soft rubber mold is in contact with the protective film has a similar or same shape as a surface of the screen to which the protective film is to be attached. The profile soft rubber mold may be specifically a profile silicone soft head.

In an implementation of this application, the protective film is first attached to a planar region of a 3D large-angle display, then a protective film in a curved region of the display is fully heated and molded by using a heated profile silicone soft head, and pressure sensitive adhesive of the adhesive layer is activated by using hot-pressing pressure, so that the protective film is attached to a surface of the 3D large-angle display.

It may be understood that, when the protective film has a lower release layer and an upper protective layer, during attachment, the lower release layer needs to be first peeled off, and then the adhesive layer is attached to the surface of the screen. After hot-pressing molding, the upper protective layer is peeled off.

According to the protective film provided in this embodiment of this application, after the protective film is attached to the surface of the screen, the protective film is molded by using the hot-pressing process, so that the protective film can better adapt to a curvature of a curved display, and totally matches the curvature of the curved display. Therefore, in this application, after the protective film is molded through post hot-pressing, the protective film can be attached to adapt to a 3D curved display with a larger angle. The protective film provided in this embodiment of this application further has high hardness and excellent scratch resistance. This can improve user experience.

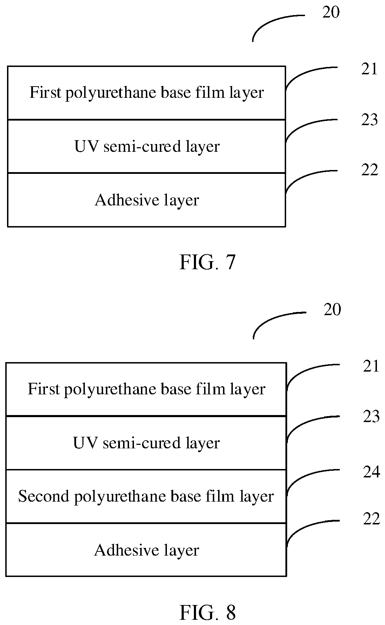

As shown in FIG. 7, an embodiment of this application further provides a protective film 20, configured to be attached to a screen of an electronic device, to protect the screen from external damage. The screen of the electronic device may be specifically a display. The protective film 20 is applied to 2D, 2.5D, and 3D displays, and may be applied to a 3D large-angle display. In some implementations of this application, the protective film 20 includes a first polyurethane base film layer 21, an adhesive layer 201, and a UV semi-cured layer 23 disposed between the first polyurethane base film layer 21 and the adhesive layer 22.

As shown in FIG. 8, in some other implementations of this application, the protective film 20 includes a first polyurethane base film layer 21, an adhesive layer 201, a UV semi-cured layer 23 disposed between the first polyurethane base film layer 21 and the adhesive layer 22, and a second polyurethane base film layer 24 disposed between the adhesive layer 22 and the UV semi-cured layer 23.

In an implementation of this application, the first polyurethane base film layer 21 and the second polyurethane base film layer 24 each serve as a main material layer of the protective film, and may provide mechanical and optical performance for the protective film. The first polyurethane base film layer 21 and the second polyurethane base film layer 24 each have relatively high hardness and a relatively high glass transition temperature Tg. Each of the first polyurethane base film layer 21 and the second polyurethane base film layer 24 has Shore hardness falling within a range of 45D to 75D and the glass transition temperature Tg greater than or equal to 30°C.

According to the protective film 20 provided in this embodiment of this application, the first polyurethane base film layer 21 and the second polyurethane base film layer 24 each have relatively high hardness and a relatively high glass transition temperature Tg to help provide high hardness, excellent abrasion resistance, and scratch resistance for the protective film. The UV semi-cured layer is disposed, so that hardness of the protective film before being attached to a surface of the screen can be reduced, and the protective film can be applied to a post UV-radiation attachment process. This improves attachment performance of the protective film, and effectively resolves an attachment bounce problem caused by increasing the hardness of the protective film. Therefore, the protective film has high hardness, excellent scratch resistance, and good attachment performance. Therefore, compared with a conventional protective film in the industry, the protective film 20 in this embodiment of this application may be attached to the 3D large-angle curved display without sacrificing hardness and scratch resistance experience of the protective film, and is tightly bonded to CG (cover glass, cover glass) of the display without bounce and warping, so that the protective film well protects a curved region of the display.

According to the protective film 20 provided in this embodiment of this application, a composite film system of "PU base film layer-UV semi-cured layer-adhesive layer" or "PU base film layer-UV semi-cured layer-PU base film layer-adhesive layer" is constructed. Because the UV semi-cured layer is in a semi-cured state in which the layer is not totally cured, hardness and a modulus of the protective film before being attached to the surface of the screen can be reduced, to improve attachment performance of the protective film on the surface of the 3D large-angle screen. In addition, the UV semi-cured layer is cured through UV irradiation, so that the protective film is molded in situ through curing, and hardness and protection performance of the protective film can be improved after the protective film is attached to the surface of the screen. Therefore, the protective film 20 may have high hardness, excellent scratch resistance, and good attachment performance.

Specifically, in an implementation of this application, the post UV-radiation attachment process is specifically as follows: First, the protective film is attached to the surface of the screen, and then the protective film is cured and molded through UV light irradiation, so that the protective film is perfectly attached to a surface of a CG cover. In the post UV-radiation attachment process, after the protective film is attached to the surface of the screen, the protective film is molded, through curing, into a shape that matches the screen. Therefore, the protective film can be better bonded to the screen, to effectively avoid the following conventional-technology problem: When the protective film that is molded, through hot pressing in advance, into the shape that matches the screen is attached to the surface of the screen, attachment bounce is caused because the protective film does not match a curvature of the screen. Therefore, when being adhered to the curved display, the protective film may be more reliable. In addition, an inward-retraction distance of the protective film relative to an edge of the screen can be reduced, and appearance refinement can be improved.

In an implementation of this application, the protective film 20 is of a planar structure, and is a planar protective film.

In an implementation of this application, when the protective film 20 is attached to the surface of the screen, a side that is of the adhesive layer 22 and that is far away from the first polyurethane base film layer 21 is adhered to the screen of the electronic device.

In an implementation of this application, hardness of each of the first polyurethane base film layer 21 and the second polyurethane base film layer 24 may be obtained through test by using a Shore hardness tester, and the Shore hardness of each of the first polyurethane base film layer 21 and the second polyurethane base film layer 24 may fall within a range of 50D to 70D. The glass transition temperature may be obtained by performing a differential scanning calorimetry test, and the glass transition temperature Tg may fall within a range of 30°C to 70°C.

In some implementations of this application, a Young's modulus of each of the first polyurethane base film layer 21 and the second polyurethane base film layer 24 is controlled to fall within a range of 500 Mpa to 3 Gpa. In some other implementations of this application, the Young's modulus of each of the first polyurethane base film layer 21 and the second polyurethane base film layer 24 may fall within a range of 1 Gpa to 2 Gpa. When the Young's modulus is controlled to fall within a proper range, specific elasticity of the protective film can be ensured, and attachment bounce caused due to excessively large bounce stress generated because the protective film does not match the curvature during attachment can be effectively avoided.

In an implementation of this application, the first polyurethane base film layer 21 and the second polyurethane base film layer 24 each are a polyurethane acrylate (PUA) film layer or a thermoplastic polyurethane (TPU) film layer.

In some implementations of this application, the first polyurethane base film layer 21 and the second polyurethane base film layer 24 each are a polyurethane acrylate film layer, and the polyurethane acrylate film layer may be molded through coating. Specifically, a raw material for producing the polyurethane acrylate film layer may include rigid isocyanate, resilient isocyanate, a polyol, hydroxyl acrylate, a photoinitiator, and a coupling reagent. The rigid isocyanate may improve hardness and a modulus of the PUA, and the resilient isocyanate may provide excellent resilience for the PUA base film. The polyol may provide resilience and ductility for the PUA base film. As a chain extender, the hydroxyl acrylate may adjust a cross-link density of the PUA base film, and control optical performance and a heat deflection temperature of the PUA base film.

The rigid isocyanate may include one or more of isophorone diisocyanate (IPDI), xylylene diisocyanate (XDI), methylcyclohexylene diisocyanate (HTDI), norbonyl diisocyanate (NBDI), 4,4-dicyclohexylmethane diisocyanate (H₁₂MDI), and tetramethylxylylene diisocyanate (TMXDI). The resilient isocyanate may include one or more of hexamethylene diisocyanate (HDI), trimethylhexamethylene diisocyanate (TMDI), and hydrogenated xylene diisocyanate (HXDI). The polyol may include one or more of a polyester polyol, a polycaprolactone polyol, and a polycarbonate diol. The hydroxyl acrylate may include one or more of hydroxyethyl acrylate, tripropylene glycol diacrylate, pentaerythritol diacrylate, trimethylolpropane triacrylate, and pentaerythritol triacrylate. The photoinitiator may include one or more of 2,4,6-trimethylbenzoyldiphenyl phosphine oxide, 2-methyl-1-[4-methylthiophenyl]-2-morpholino-1-acetone, 1-hydroxycyclohexyl phenyl ketone, 1-hydroxycyclohexyl phenyl ketone, 4-chlorobenzophenone, and methyl 2-benzoylbenzoate. The coupling reagent may include one or more of polymethylsiloxane, γ-methacryloxypropyltrimethoxylsilane, γ-aminopropyltrimethoxysilane, and γ-glycidoxypropyltrimethoxysilane.

In some other implementations of this application, the first polyurethane base film layer 21 and the second polyurethane base film layer 24 each are a thermoplastic polyurethane film layer, and the thermoplastic polyurethane film layer may be molded through casting. Specifically, a raw material for producing the thermoplastic polyurethane film layer includes a thermoplastic polyurethane particle, an antioxidant, a hindered anime light stabilizer, and a plasticizer. The thermoplastic polyurethane particle may be synthesized from dicyclohexylmethane diisocyanate (H₁₂MDI), hexamethylene diisocyanate (HDI), a polycaprolactone polyol, and a chain extender.

In some implementations of this application, a thickness of each of the first polyurethane base film layer 21 and the second polyurethane base film layer 24 may be 15 µm to 150 µm. In some other implementations of this application, the thickness of each of the first polyurethane base film layer 21 and the second polyurethane base film layer 24 may be 20 µm to 120 µm. In some other implementations of this application, the thickness of each of the first polyurethane base film layer 21 and the second polyurethane base film layer 24 may be 30 µm to 100 µm or 40 µm to 80 µm.

In an implementation of this application, materials and thicknesses of the first polyurethane base film layer 21 and the second polyurethane base film layer 24 may be the same or different.

In an implementation of this application, the UV semi-cured layer 23 is a semi-cured polyurethane acrylate layer, namely, a polyurethane acrylate layer that is not totally cured. The UV semi-cured layer 23 includes a polyurethane acrylate that includes a reactive functional group (such as a double bond). UV light irradiation prepolymerization energy of the UV semi-cured layer 23 falls within a range of 10 mj/cm² to 500 mj/cm². A low modulus existing before the UV semi-cured layer is cured helps improve attachment performance, and a high modulus existing after the UV semi-cured layer is totally cured helps improve reliability and user experience. After the UV semi-cured layer 23 is totally cured, the Shore hardness falls within a range of 45D to 75D, and the glass transition temperature Tg is greater than or equal to 30°C.

In some implementations of this application, a thickness of the UV semi-cured layer 23 falls within a range of 30 µm to 150 µm. In some other implementations of this application, the thickness of the UV semi-cured layer 23 falls within a range of 50 µm to 80 µm.

In some implementations of this application, a third polyurethane base film layer may be further added, and a UV semi-cured layer may be further added, to construct a composite film system of "PU base film layer-UV semi-cured layer-PU base film layer-UV semi-cured layer-PU base film layer-adhesive layer".

In an implementation of this application, a material of the adhesive layer 22 is pressure sensitive adhesive, and may be specifically silicone adhesive or acrylate adhesive. In some implementations of this application, a thickness of the adhesive layer 22 may be 10 µm to 50 µm. In some implementations of this application, the thickness of the adhesive layer 22 may be 20 µm to 30 µm. When a peel angle is 180°, peel strength of the adhesive layer is greater than 800 gf/25 mm

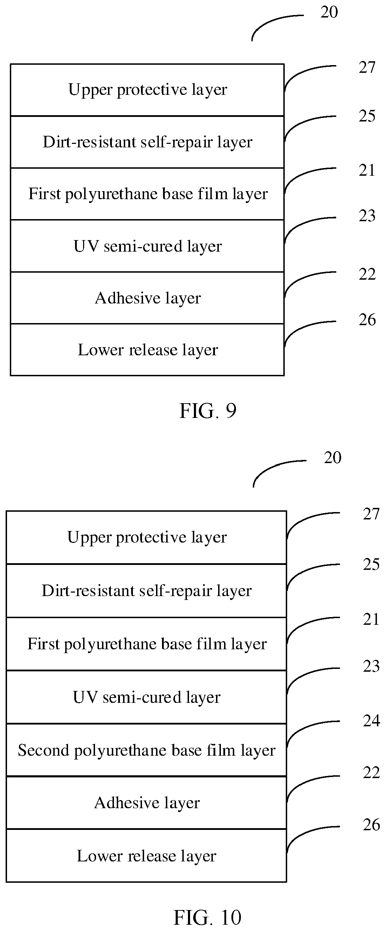

As shown in FIG. 9 and FIG. 10, in some implementations of this application, to provide dirt-resistance (low surface energy and a high contact angle) and self-repair (high resilience) performance for the protective film, the protective film 20 may further include a dirt-resistant self-repair layer 25 disposed on a side that is of the first polyurethane base film layer 21 and that is far away from the adhesive layer 22. The dirt-resistant self-repair layer 25 may be a polyurethane coating doped with a fluoroether auxiliary and/or a fluorocarbon auxiliary, or may be a polyurethane acrylate coating doped with a fluoroether auxiliary and/or a fluorocarbon auxiliary. A raw material of the polyurethane acrylate may include hexamethylene diisocyanate, a polyol, hydroxyl acrylate, a photoinitiator, and a coupling reagent. Selection of the fluoroether and the fluorocarbon is not limited. The fluoroether and the fluorocarbon may be an existing commonly-used anti-fingerprint and dirt-resistant material, and may be specifically one or more of fluorosilane, perfluoropolyether silane, perfluoropolyether alcohol, fluorocarbon silane, and fluorocarbon alcohol. In some implementations of this application, a thickness of the dirt-resistant self-repair layer 25 may be 5 µm to 40 µm. In some other implementations of this application, the thickness of the dirt-resistant self-repair layer 25 may be 10 µm to 30 µm, or may be 15 µm to 20 µm. The dirt-resistant self-repair layer 25 has Pencil hardness that is at a load of 500 g and that may be greater than or equal to 1H and a contact angle that may be greater than or equal to 90°. In some implementations, the contact angle of the dirt-resistant self-repair layer 25 may be greater than or equal to 105°.

In some specific implementations of this application, the dirt-resistant self-repair layer 25 may be formed through UV curing by using hexamethylene diisocyanate, trimethylhexamethylene diisocyanate, a polycaprolactone polyol, fluorosilane, hydroxyethyl acrylate, and 2,4,6-trimethylbenzoyldiphenyl phosphine oxide. The hexamethylene diisocyanate is hexamethylene diisocyanate with high resilience, and the polycaprolactone polyol is selected as a polycaprolactone polyol with high flexibility.

In an implementation of this application, a Young's modulus of the dirt-resistant self-repair layer 25 is less than the Young's modulus of the first polyurethane base film layer 21 and the Young's modulus of the second polyurethane base film layer 24, and has good resilience. Specifically, the Young's modulus of the dirt-resistant self-repair layer 25 may be 50 Mpa to 800 Mpa, or may be 100 Mpa to 600 Mpa.

In some implementations of this application, to enhance adhesion of the protective film to the surface of the screen, a base coating may be further disposed between the UV semi-cured layer 23 and the adhesive layer 22 or between the second polyurethane base film layer 24 and the adhesive layer 22. The base coating is a silane-modified polyurethane acrylate coating, and a thickness thereof may be 1 µm to 20 µm. Further, the thickness of the base coating may be 1 µm to 5 µm.

As shown in FIG. 9 and FIG. 10, in some implementations of this application, the protective film 20 further includes a lower release layer 26, and the lower release layer 26 is disposed on a surface of a side that is of the adhesive layer 22 and that is far away from the first polyurethane base film layer 21. A material of the lower release layer 26 may be PET or PP, and a thickness thereof may fall within a range of 23 µm to 75 µm, or may be 38 µm to 50 µm. The lower release layer 26 has ultraviolet light shielding performance, and light transmittance thereof in a wavelength range of 10 nm to 400 nm is less than 10%. Because the lower release layer 26 has ultraviolet light shielding performance, the protective film can be protected from ultraviolet light, to ensure that the UV semi-cured layer 23 is in a semi-cured state before the protective film is attached to the screen. An outwardly extending extension part is disposed at the lower release layer, and is configured to be peeled off the adhesive layer.

As shown in FIG. 9 and FIG. 10, in some implementations of this application, the protective film 10 further includes an upper protective layer 27, and the upper protective layer 27 is located on the side that is of the polyurethane base film layer and that is far away from the adhesive layer. A material of the upper protective layer 27 may be PET or PP, and a thickness thereof may fall within a range of 23 µm to 75 µm, or may be 38 µm to 50 µm. The upper protective layer 27 has ultraviolet light shielding performance, and light transmittance thereof in the wavelength range of 10 nm to 400 nm is less than 10%. Because the upper protective layer 27 has ultraviolet light shielding performance, the protective film can be protected from ultraviolet light, to ensure that the UV semi-cured layer 23 is in a semi-cured state before the protective film is attached to the screen. An outwardly extending extension part is disposed at the upper protective layer, to facilitate peel-off.

In an implementation of this application, a total thickness of the protective film 20 may be 70 µm to 300 µm.

An embodiment of this application provides a production method for a protective film 20, including:
producing a first polyurethane base film on a PET carrier film, where the first polyurethane base film has Shore hardness falling within a range of 45D to 75D and a glass transition temperature Tg greater than or equal to 30°C;
producing a UV semi-cured layer on a surface of one side of the first polyurethane base film; and
producing an adhesive layer at the UV semi-cured layer.

Another embodiment of this application provides a production method for a protective film 20, including:
producing a first polyurethane base film layer on a PET carrier film, where the first polyurethane base film layer has Shore hardness falling within a range of 45D to 75D and a glass transition temperature Tg greater than or equal to 30°C;
producing a UV semi-cured layer on a surface of one side of the first polyurethane base film layer;
producing a second polyurethane base film at the UV semi-cured layer, where the second polyurethane base film layer has Shore hardness falling within a range of 45D to 75D and a glass transition temperature Tg greater than or equal to 30°C; and
producing an adhesive layer on the second polyurethane base film.

In the foregoing implementation of this application, the production method further includes: producing a dirt-resistant self-repair layer on a surface of a side that is of the first polyurethane base film and that is far away from the adhesive layer.

In an implementation of this application, the production method may further include: further producing another film layer structure based on a requirement. In some implementations of this application, the production method further includes: disposing an upper protective layer at the dirt-resistant self-repair layer, and disposing a lower release layer on a side that is of the adhesive layer and that is far away from the first polyurethane base film layer. In some implementations of this application, the production method further includes: producing a base coating between the UV semi-cured layer and the adhesive layer or between the second polyurethane base film layer and the adhesive layer.

In an implementation of this application, a method for producing the first PU base film and the second PU base film may be molding a PUA base film through coating or molding a TPU base film through casting. In an implementation of this application, the dirt-resistant self-repair layer may be produced through coating by using dirt-resistant self-repair liquid. The dirt-resistant self-repair liquid may include fluoroether and/or fluorocarbon, and polyurethane or a raw material of polyurethane acrylate. The raw material of the polyurethane acrylate may include hexamethylene diisocyanate, a polyol, hydroxyl acrylate, a photoinitiator, and a coupling reagent. Selection of the fluoroether and the fluorocarbon is not limited. The fluoroether and the fluorocarbon may be an existing commonly-used anti-fingerprint and dirt-resistant material, and may be specifically one or more of fluorosilane, perfluoropolyether silane, perfluoropolyether alcohol, fluorocarbon silane, and fluorocarbon alcohol. In an implementation of this application, the adhesive layer may be produced through coating. In an implementation of this application, the base coating may be produced through coating by using base coating liquid. The base coating liquid may include a silane modifier, a polyurethane acrylate oligomer, a chain extender, a leveling agent, an initiator, and a solvent. The solvent may be a combination of one or more of isopropanol, ethanol, ethyl acetate, butyl acetate, toluene, xylene, butanone, and methyl isobutyl ketone.

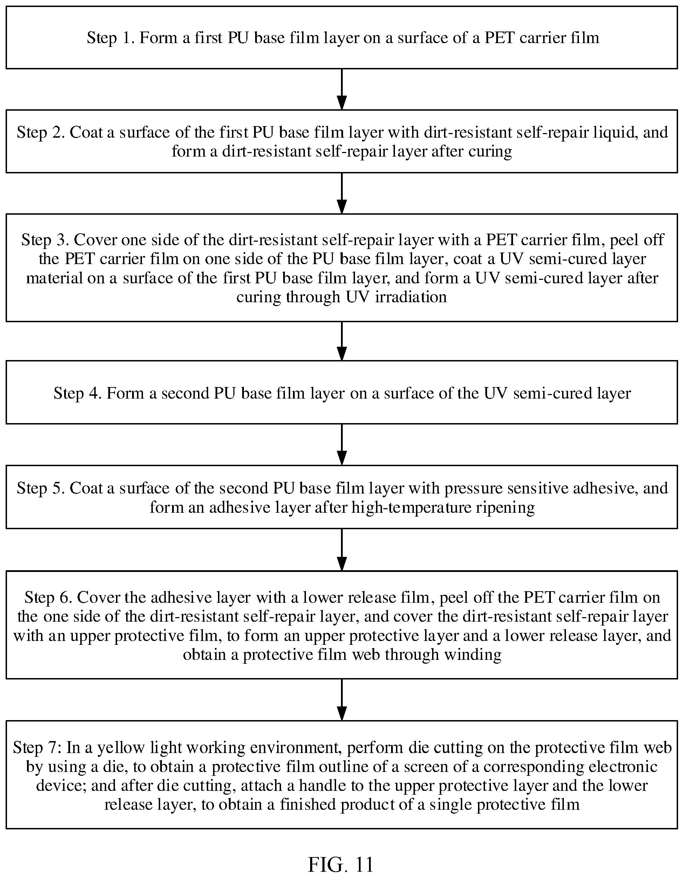

In a specific implementation of this application, as shown in FIG. 11, the protective film may be produced in the following manner:
Step 1. Form a first PU base film layer on a surface of a PET carrier film, where a specific method may be forming a PUA base film layer through coating and UV irradiation, or forming a TPU base film layer through casting.
Step 2. Coat a surface of the first PU base film layer with dirt-resistant self-repair liquid, and form a dirt-resistant self-repair layer after curing.
Step 3. Cover one side of the dirt-resistant self-repair layer with a PET carrier film, peel off the PET carrier film on one side of the first PU base film layer, coat a UV semi-cured layer material on a surface of the first PU base film layer, and form a UV semi-cured layer after curing through UV irradiation.
Step 4. Form a second PU base film layer on a surface of the UV semi-cured layer, where a specific method may be forming a PUA base film layer through coating and UV irradiation, or forming a TPU base film layer through casting.
Step 5. Coat a surface of the second PU base film layer with pressure sensitive adhesive, and form an adhesive layer after high-temperature ripening.
Step 6. Cover the adhesive layer with a lower release film, peel off the PET carrier film on the one side of the dirt-resistant self-repair layer, and cover the dirt-resistant self-repair layer with an upper protective film, to form an upper protective layer and a lower release layer, and obtain a protective film web through winding.
Step 7. In a yellow light working environment, perform die cutting on the protective film web by using a die, to obtain a protective film outline of a screen of a corresponding electronic device; and after die cutting, attach a handle to the upper protective layer and the lower release layer, to obtain a finished product of a single protective film.

A material of the UV semi-cured layer is a raw material of polyurethane acrylate, and may be the same as or different from a raw material of the first PU base film layer. When the UV semi-cured layer is formed through irradiation curing, low-power UV irradiation is performed. Specifically, irradiation energy of low-power UV irradiation may be 10 mj/cm² to 500 mj/cm².

It may be understood that, when the protective film does not include the second PU base film layer, step 4 in the production method is omitted, and the adhesive layer may be directly produced at the UV semi-cured layer.

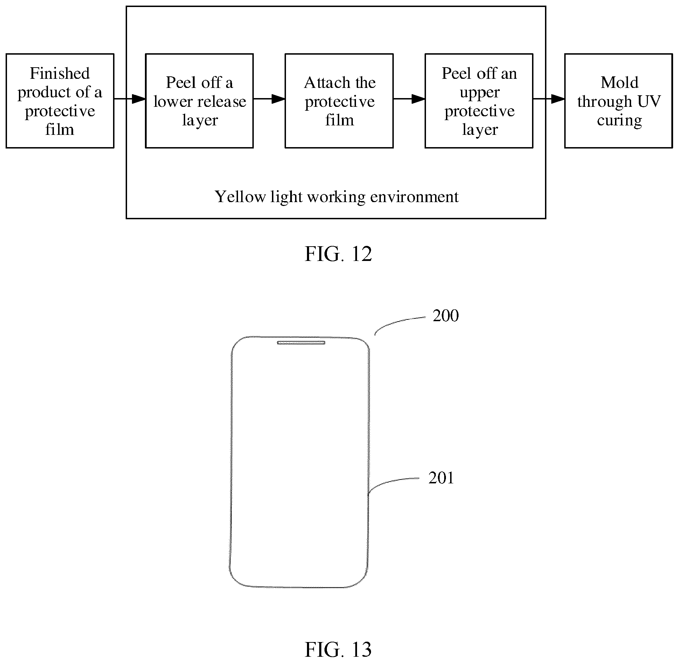

Correspondingly, as shown in FIG. 12, an embodiment of this application further provides an attachment method for the foregoing protective film, including:
in a yellow light working environment, attaching the protective film 20 to a surface of a screen of an electronic device by using the adhesive layer 22, and then curing and molding, through UV light irradiation, the protective film 20 into a shape that matches the screen.

In an implementation of this application, in the attachment method, energy of UV light irradiation falls within a range of 1000 mj/cm² to 3000 mj/cm².

An operation of attaching the protective film to the surface of the screen of the electronic device by using the adhesive layer may be completed by using a film attachment fixture or device.

It may be understood that, when the protective film has a lower release layer and an upper protective layer, during attachment, the lower release layer needs to be first peeled off, and then the adhesive layer is attached to the surface of the screen. After the protective film is attached to the screen, before UV light irradiation, the upper protective layer is peeled off. Operations of peeling off the lower release layer, attaching the protective film, and the peeling off the upper protective layer are all performed in the yellow light working environment.

According to the protective film provided in this embodiment of this application, after the protective film is attached to the surface of the screen, the protective film is cured and molded through UV light irradiation, so that the protective film can better adapt to a curvature of a curved display, and totally matches the curved display. Therefore, in this application, after the protective film is molded through post UV-irradiation, the protective film can be attached to adapt to a 3D curved display with a larger angle. The protective film provided in this embodiment of this application further has high hardness and excellent scratch resistance. This can improve user experience.

As shown in FIG. 13, an embodiment of this application further provides a terminal. The terminal 200 may be a mobile phone, a tablet computer, a notebook computer, a portable computer, an intelligent wearable product, and the like. The terminal 200 includes a display 201 and a protective film 202 attached to a surface of the display 201. The display 201 includes cover glass disposed at an outermost layer, and the protective film 202 is tightly bonded to the cover glass by using an adhesive layer.

In an implementation of this application, the display 201 may be a curved display, or may be a flat display. The curved display may be a 2.5D or 3D curved display.

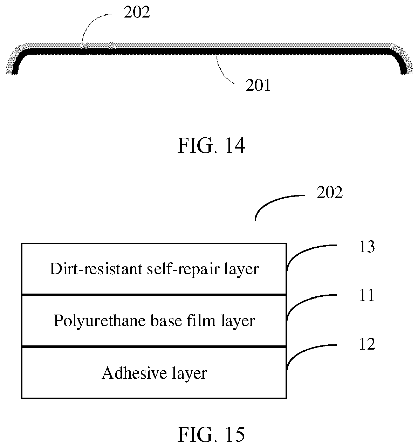

In an implementation of this application, because the protective film 202 has good attachment performance, when the display 201 is a 3D large-angle curved display, the protective film 202 may be attached closer to an edge of the display, to reduce an inward-retraction distance of the protective film relative to the display 201. As shown in FIG. 14, when the protective film 202 is attached to the surface of the curved display 201, a shape of the protective film 202 matches the display, and the protective film 202 only has an inward-retraction distance within a tolerance range. Specifically, the inward-retraction distance of the protective film 202 may be less than or equal to 2 mm. Specifically, the inward-retraction distance may be 0 mm to 1 mm, for example, 0.3 mm, 0.8 mm, or 1 mm Because the shape of the protective film 202 matches the display, the display can be better protected, and appearance refinement of the terminal can be improved.

In an implementation of this application, the protective film 202 is formed by attaching a protective film 10. As shown in FIG. 15, the protective film 202 includes an adhesive layer 12 and a polyurethane base film layer 11 disposed at the adhesive layer 12. In some implementations of this application, the protective film 202 further includes a dirt-resistant self-repair layer 13 disposed at the polyurethane base film layer 11. In some implementations of this application, the protective film 202 further includes a base coating 14 disposed between the polyurethane base film layer 11 and the adhesive layer 12.

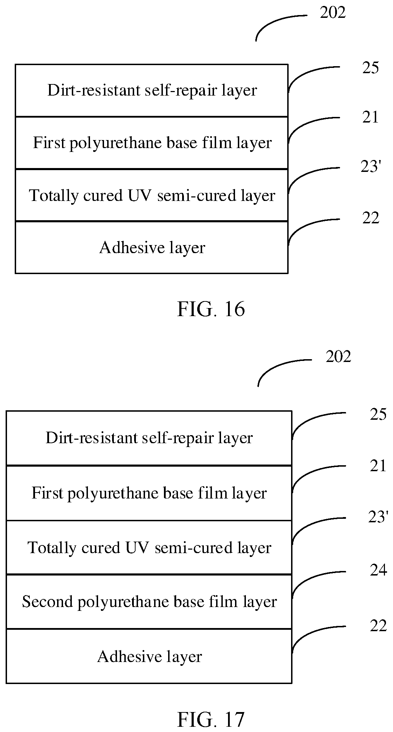

In another implementation of this application, the protective film 202 is formed by attaching a protective film 20. As shown in FIG. 16, the protective film 202 includes an adhesive layer 22, a totally cured UV semi-cured layer 23' disposed at the adhesive layer 22, and a first polyurethane base film layer 21 disposed at the totally cured UV semi-cured layer 23'. In some implementations of this application, the protective film 202 further includes a dirt-resistant self-repair layer 25 disposed at the first polyurethane base film layer 21.

In another implementation of this application, the protective film 202 is formed by attaching a protective film 20. As shown in FIG. 17, the protective film 202 includes an adhesive layer 22, a second polyurethane base film layer 24 disposed at the adhesive layer 22, a totally cured UV semi-cured layer 23' disposed at the second polyurethane base film layer 24, and a first polyurethane base film layer 21 disposed at the totally cured UV semi-cured layer 23'. In some implementations of this application, the protective film 202 further includes a dirt-resistant self-repair layer 25 disposed at the first polyurethane base film layer 21.

When the protective film 20 is attached to the surface of the display 201, after UV irradiation, a UV semi-cured layer 23 is totally cured to form the totally cured UV semi-cured layer 23'. In an implementation of this application, the totally cured UV semi-cured layer 23' is a totally cured polyurethane acrylate layer. The totally cured UV semi-cured layer 23' has Shore hardness falls within a range of 45D to 75D and a glass transition temperature Tg greater than or equal to 30°C.

The following further describes the technical solutions of this application by using a plurality of specific embodiments.

### Embodiment 1

A production method and an attachment method for a protective film are as follows:
(1) Obtain, by weight, 14 parts of isophorone diisocyanate, 17 parts of hexamethylene diisocyanate, 12 parts of polycaprolactone polyols, 16 parts of polyester polyols, 30 parts of trimethylolpropane triacrylate, 25 parts of hydroxyethyl acrylate, 4 parts of polymethylsiloxane, 1 part of 2,4,6-trimethylbenzoyldiphenyl phosphine oxide, and 1 part of 1-hydroxycyclohexyl phenyl ketone, to produce PUA base film coating liquid; and produce, through slit coating and UV irradiation curing, a high-hardness PUA base film with a thickness of 80 µm and hardness of 65D.
(2) Obtain, by weight, 12 parts of xylylene diisocyanate, 25 parts of hexamethylene diisocyanate, 20 parts of polycaprolactone polyols, 10 parts of polyester polyols, 10 parts of trimethylolpropane triacrylate, 15 parts of hydroxyethyl acrylate, 0.5 part of perfluoropolyether silane, 2 parts of γ-methacryloxypropyltrimethoxylsilane, 1 part of 2,4,6-trimethylbenzoyldiphenyl phosphine oxide photoinitiator, and 0.5 part of 1 -hydroxycyclohexyl phenyl ketone, to produce dirt-resistant self-repair liquid; coat one side of the high-hardness PUA base film with the dirt-resistant self-repair liquid; irradiate and cure the dirt-resistant self-repair liquid by using UV light of a mercury lamp source with an irradiation dose of 2500 mj/cm²; and form a dirt-resistant self-repair layer with a thickness of 18 µm on a surface of the one side of the high-hardness PUA film, to obtain the dirt-resistant self-repair layer/high-hardness PUA base film.
(3) Coat one side of a PUA layer of the dirt-resistant self-repair layer film/high-hardness PUA base film with a silicone layer with a thickness of 25 µm; and after ripening at 150°C, cover a PET upper protective film and a PET lower release film with a thickness of 50 µm, to obtain a protective film web through winding.
(4) Perform die cutting on the protective film web by using a die, to obtain a protective film outline of a screen of a corresponding electronic device; inwardly retract the protective film by 1.0 mm; and attach a handle to the upper protective film layer and the lower release layer, to obtain a finished product of a single protective film.
(5) Peel off the lower release layer of the single protective film; attach the protective film to a surface of a 3D large-angle curved display of a mobile phone by using a film attachment fixture or device; heat and soften the PU protective film by using a heating platform, so that a film surface temperature is about 60°C; mold the protective film through hot pressing for 30s by using a soft rubber head, so that the protective film is tightly attached to a glass cover of the display; and finally, peel off the upper protective film layer.

To detect an attachment effect of the protective film, the mobile phone to which the protective film is attached is placed in an environment of 55°C and 95%RH for 72 h, and the protective film does not bounce and warp at a curved position of the 3D large-angle curved display.

To detect surface performance of the protective film, hardness, abrasion resistance, and dirt resistance of the protective film are tested. Specifically, pencil hardness of the protective film at a load of 500 gf is greater than or equal to 2H. After the protective film is rubbed with a copper brush 50 times at the load of 500 gf (test condition: Japanese OSAKA brand copper brush, brush head of 4×6 bristles, stroke of 20 mm), no film is removed and scratched. A contact angle of a surface of the protective film is 109° to 112°.

### Embodiment 2

A production method and an attachment method for a protective film are as follows:
(1) Obtain, by weight, 94 parts of polycaprolactone TPU particles, 2 parts of antioxidants, 1 part of hindered anime light stabilizer, and 3 parts of silicone oil plasticizers, to mold a high-hardness TPU base film with a thickness of 100 µm and hardness of 64D through casting at a temperature of 160°C to 200°C.
(2) Coat a surface of one side of the high-hardness TPU base film with the dirt-resistant self-repair liquid produced in Embodiment 1; irradiate and cure the dirt-resistant self-repair liquid by using UV light of a mercury lamp source with an irradiation dose of 2800 mj/cm²; and form a dirt-resistant self-repair layer with a thickness of 24 µm on the surface of the one side of the high-hardness TPU base film, to obtain the dirt-resistant self-repair layer/high-hardness TPU base film.
(3) Coat one side of a PU layer of the dirt-resistant self-repair layer film/high-hardness TPU base film with a silicone layer with a thickness of 20 µm; and after ripening at 155°C, cover a PET upper protective film and a PET lower release film with a thickness of 50 µm, to obtain a protective film web through winding.
(4) Perform die cutting on the protective film web by using a die, to obtain a protective film outline of a screen of a corresponding electronic device; inwardly retract the protective film by 1.0 mm; and attach a handle to the upper protective film layer and the lower release layer, to obtain a finished product of a single protective film.
(5) Peel off the lower release layer of the single protective film; attach the protective film to the surface of a 3D large-angle curved display of a mobile phone by using a film attachment fixture or device; heat and soften the PU protective film by using a heating platform, so that a film surface temperature is about 55°C; mold the protective film through hot pressing for 40s by using a soft rubber head, so that the protective film is tightly attached to a glass cover of the display; and finally, peel off the upper protective film layer.

To detect an attachment effect of the protective film, the mobile phone to which the protective film is attached is placed in an environment of 55°C and 95%RH for 72 h. A result shows that the protective film does not bounce and warp at a curved position of the 3D large-angle curved display.

To detect surface performance of the protective film, hardness, abrasion resistance, and dirt resistance of the protective film are tested. Specifically, pencil hardness of the protective film at a load of 500 gf is greater than or equal to 1H. After the protective film is rubbed with a copper brush 50 times at the load of 500 gf (test condition: Japanese OSAKA brand copper brush, brush head of 4×6 bristles, stroke of 20 mm), no film is removed and scratched. A contact angle of a surface of the protective film is 110° to 112°.

### Embodiment 3

A production method and an attachment method for a protective film are as follows:
(1) Obtain, by weight, 20 parts of 4,4-dicyclohexylmethane diisocyanate, 15 parts of hexamethylene diisocyanate, 20 parts of polycaprolactone polyols, 18 parts of polyester polyols, 25 parts of pentaerythritol diacrylate, 25 parts of hydroxyethyl acrylate, 4 parts of polymethylsiloxane, 1 part of 2,4,6-trimethylbenzoyldiphenyl phosphine oxide photoinitiator, and 0.8 part of 1-hydroxycyclohexyl phenyl ketone, to produce PUA base film coating liquid in a mixing manner; and produce, on a PET carrier film through slit coating and UV irradiation curing, a high-hardness PUA base film with a thickness of 20 µm and hardness of 68D.
(2) Obtain, by weight, 8 parts of 4,4-dicyclohexylmethane diisocyanate, 32 parts of hexamethylene diisocyanate, 35 parts of polycaprolactone polyols, 5 parts of polyester polyols, 15 parts of trimethylolpropane triacrylate, 10 parts of hydroxyethyl acrylate, 0.5 part of perfluoropolyether silane, 2 parts of γ-methacryloxypropyltrimethoxylsilane, 0.8 part of 2,4,6-trimethylbenzoyldiphenyl phosphine oxide photoinitiator, and 0.5 part of 1-hydroxycyclohexyl phenyl ketone, to produce dirt-resistant self-repair liquid in a mixing manner; coat one side of the high-hardness PUA base film with the dirt-resistant self-repair liquid; irradiate and cure the dirt-resistant self-repair liquid by using UV light of a mercury lamp source with an irradiation dose of 2500 mj/cm²; form a dirt-resistant self-repair layer with a thickness of 20 µm on a surface of the one side of the high-hardness PUA film; and cover a surface of the dirt-resistant self-repair layer with a PET carrier film, to obtain the PET carrier film/dirt-resistant self-repair layer/high-hardness PUA base film/PET carrier film.
(3) Peel off the PET carrier film on one side of the high-hardness PUA base film; mix 20 parts of 4,4-dicyclohexylmethane diisocyanate, 15 parts of hexamethylene diisocyanate, 20 parts of polycaprolactone polyols, 18 parts of polyester polyols, 25 parts of pentaerythritol diacrylate, 25 parts of hydroxyethyl acrylate, 4 parts of polymethylsiloxane, 1 part of 2,4,6-trimethylbenzoyldiphenyl phosphine oxide photoinitiator, and 0.8 part of 1-hydroxycyclohexyl phenyl ketone, to produce UV semi-cured layer coating liquid; coat the one side of the high-hardness PUA layer with the UV semi-cured layer coating liquid; irradiate and cure the UV semi-cured layer coating liquid by using UV light of a mercury lamp source with an irradiation dose of 500 mj/cm²; form a UV semi-cured layer with a thickness of 50 µm; and finally, coat a surface of the UV semi-cured layer with a silicone layer with a thickness of 25 µm, and after ripening at 150°C, cover a PET upper protective film and a PET lower release film with a thickness of 50 µm, to obtain a protective film web through winding.
(4) Perform die cutting on the protective film web by using a die, to obtain a protective film outline of a screen of a corresponding electronic device; inwardly retract the protective film by 1.0 mm; and attach a handle to the upper protective film layer and the lower release layer, to obtain a finished product of a single protective film.
(5) Peel off the lower release layer of the single protective film; attach the protective film to a surface of a 3D large-angle curved display of a mobile phone by using a film attachment fixture or device; peel off the upper protective film layer; and cure and mold the protective film through UV irradiation with an irradiation dose of 1800 mj/cm².

To detect attachment quality of the obtained protective film, the mobile phone to which the protective film is attached is placed in an environment of 55°C and 95%RH for 72 h. A result shows that the protective film does not bounce and warp at a curved position of the 3D large-angle curved display.

To detect surface performance of the protective film, hardness, abrasion resistance, and dirt resistance of the protective film are tested. Specifically, pencil hardness of the protective film at a load of 500 gf is greater than or equal to 1H. After the protective film is rubbed with a copper brush 50 times at the load of 500 gf (test condition: Japanese OSAKA brand copper brush, brush head of 4×6 bristles, stroke of 20 mm), no film is removed and scratched. A contact angle of a surface of the protective film is 108° to 111°.

### Embodiment 4

A production method and an attachment method for a protective film are as follows:
(1) Take the PUA based film coating liquid produced in Embodiment 3, and produce, on a PET carrier film through slit coating and UV irradiation curing, a high-hardness PUA base film with a thickness of 15 µm and hardness of 70D.
(2) Coat one side of the high-hardness PUA base film with the dirt-resistant self-repair liquid produced in Embodiment 3; and irradiate and cure the dirt-resistant self-repair liquid by using UV light of a mercury lamp source with an irradiation dose of 2400 mj/cm²; form a dirt-resistant self-repair layer with a thickness of 25 µm on a surface of the one side of the high-hardness PUA film; and cover a surface of the dirt-resistant self-repair layer with a PET carrier film, to obtain the PET carrier film/dirt-resistant self-repair layer/high-hardness PUA base film/PET carrier film.
(3) Peel off the PET carrier film on one side of the high-hardness PUA base film; coat the one side of the high-hardness PUA base film layer with the UV semi-cured layer coating liquid produced in Embodiment 3; irradiate and cure the UV semi-cured layer coating liquid by using UV light of a mercury lamp source with an irradiation dose of 450 mj/cm²; form a UV semi-cured layer with a thickness of 60 µm; finally, coat a surface of the UV semi-cured layer with a silicone layer with a thickness of 20 µm, and after ripening at 150°C, cover a PET upper protective film and a PET lower release film with a thickness of 50 µm, to obtain a protective film web through winding.
(4) Perform die cutting on the protective film web by using a die, to obtain a protective film outline of a screen of a corresponding electronic device; inwardly retract the protective film by 0.8 mm; and attach a handle to the upper protective film layer and the lower release layer, to obtain a finished product of a single protective film.
(5) Peel off the lower release layer of the single protective film; attach the protective film to a surface of a 3D large-angle curved display of a mobile phone by using a film attachment fixture or device; peel off the upper protective film layer; and cure and mold the protective film through UV irradiation with an irradiation dose of 1500 mj/cm².

To detect attachment quality of the obtained protective film, the mobile phone to which the protective film is attached is placed in an environment of 55°C and 95%RH for 72 h. A result shows that the protective film does not bounce and warp at a curved position of the 3D large-angle curved display.

To detect surface performance of the protective film, hardness, abrasion resistance, and dirt resistance of the protective film are tested. Specifically, pencil hardness of the protective film at a load of 500 gf is greater than or equal to 1H. After the protective film is rubbed with a copper brush 50 times at the load of 500 gf (test condition: Japanese OSAKA brand copper brush, brush head of 4×6 bristles, stroke of 20 mm), no film is removed and scratched. A contact angle of a surface of the protective film is 110° to 111°.

A test result in the foregoing specific embodiment shows that the protective film provided in the embodiments of this application has good attachment performance on the surface of the 3D large-angle curved display, and has relatively high hardness and excellent scratch resistance. In addition, for the 3D large-angle screen of the electronic device, the protective film can be attached through small inward retraction, and the protective film can be attached closer to an edge of the screen, to improve a protection capability, appearance refinement, and user experience.

## Claims

1. A protective film, configured to protect a screen of an electronic device, wherein the protective film comprises a polyurethane base film layer and an adhesive layer disposed on one side of the polyurethane base film layer;
the polyurethane base film layer has Shore hardness falling within a range of 45D to 75D, a glass transition temperature Tg falling within a range of 30°C to 70°C, and a heat deflection temperature T_{deflection} falling within a range of 50°C to 90°C, and Tg<T_{deflection}; and
the adhesive layer is configured to be adhered to the screen of the electronic device.

2. The protective film according to claim 1, wherein a Young's modulus of the polyurethane base film layer falls within a range of 500 Mpa to 3 Gpa.

3. The protective film according to claim 1 or 2, wherein the protective film is of a planar structure.

4. The protective film according to any one of claims 1 to 3, wherein the polyurethane base film layer is a polyurethane acrylate film layer or a thermoplastic polyurethane film layer.

5. The protective film according to any one of claims 1 to 4, wherein a thickness of the polyurethane base film layer is 30 µm to 200 µm.

6. The protective film according to any one of claims 1 to 5, wherein the adhesive layer is silicone adhesive or acrylate adhesive.

7. The protective film according to any one of claims 1 to 6, wherein a thickness of the adhesive layer is 10 µm to 50 µm.

8. The protective film according to any one of claims 1 to 7, wherein when a peel angle is 180°, peel strength of the adhesive layer is greater than 800 gf/25 mm.

9. The protective film according to any one of claims 1 to 8, wherein the protective film further comprises a dirt-resistant self-repair layer, and the dirt-resistant self-repair layer is disposed on a side that is of the polyurethane base film layer and that is far away from the adhesive layer.

10. The protective film according to claim 9, wherein the dirt-resistant self-repair layer is a polyurethane coating doped with a fluoroether auxiliary and/or a fluorocarbon auxiliary, or a polyurethane acrylate coating doped with a fluoroether auxiliary and/or a fluorocarbon auxiliary.

11. The protective film according to claim 9 or 10, wherein a thickness of the dirt-resistant self-repair layer is 5 µm to 40 µm.

12. The protective film according to any one of claims 9 to 11, wherein pencil hardness of the dirt-resistant self-repair layer at a load of 500 g is greater than or equal to 1H, and a contact angle of the dirt-resistant self-repair layer is greater than or equal to 90°.

13. The protective film according to any one of claims 9 to 12, wherein a Young's modulus of the dirt-resistant self-repair layer is less than the Young's modulus of the polyurethane base film layer.

14. The protective film according to any one of claims 1 to 13, wherein the protective film further comprises a base coating disposed between the polyurethane base film layer and the adhesive layer, and the base coating is a silane-modified polyurethane acrylate coating.

15. The protective film according to any one of claims 1 to 14, wherein the protective film further comprises a lower release layer, and the lower release layer is disposed on a surface of a side that is of the adhesive layer and that is far away from the polyurethane base film layer.

16. The protective film according to any one of claims 1 to 15, wherein the protective film further comprises an upper protective layer, and the upper protective layer is located on the side that is of the polyurethane base film layer and that is far away from the adhesive layer.

17. A production method for a protective film, comprising:
providing or producing a polyurethane base film, wherein the polyurethane base film has Shore hardness falling within a range of 45D to 75D, a glass transition temperature Tg falling within a range of 30°C to 70°C, and a heat deflection temperature T_{deflection} falling within a range of 50°C to 90°C, and Tg<T_{deflection}; and
producing an adhesive layer on a surface of one side of the polyurethane base film.

18. The production method according to claim 17, further comprising: producing a dirt-resistant self-repair layer on a surface of another side of the polyurethane base film.

19. An attachment method for a protective film, comprising:
attaching the protective film according to any one of claims 1 to 16 to a surface of a screen of an electronic device by using the adhesive layer, then heating to soften the protective film, and molding, through hot pressing by using a heated soft rubber mold, the protective film into a shape that matches the screen.

20. The attachment method according to claim 19, wherein a hot-pressing molding temperature is greater than a heat deflection temperature of the protective film, and the hot-pressing molding temperature falls within a range of 50°C to 90°C.

21. The attachment method according to claim 19, wherein in the hot-pressing molding process, hot-pressing holding duration is greater than 20s.

22. A protective film, configured to protect a screen of an electronic device, wherein the protective film comprises a first polyurethane base film layer, an adhesive layer, and a UV semi-cured layer disposed between the first polyurethane base film layer and the adhesive layer; or
the protective film comprises a first polyurethane base film layer, an adhesive layer, a UV semi-cured layer disposed between the first polyurethane base film layer and the adhesive layer, and a second polyurethane base film layer disposed between the adhesive layer and the UV semi-cured layer;
each of the first polyurethane base film layer and the second polyurethane base film layer has Shore hardness falling within a range of 45D to 75D and a glass transition temperature Tg greater than or equal to 30°C; and
the adhesive layer is configured to be adhered to the screen of the electronic device.

23. The protective film according to claim 22, wherein a Young's modulus of each of the first polyurethane base film layer and the second polyurethane base film layer falls within a range of 500 Mpa to 3 Gpa.

24. The protective film according to claim 22 or 23, wherein the protective film is of a planar structure.

25. The protective film according to any one of claims 22 to 24, wherein the first polyurethane base film layer and the second polyurethane base film layer each are a polyurethane acrylate film layer or a thermoplastic polyurethane film layer.

26. The protective film according to any one of claims 22 to 25, wherein a thickness of each of the first polyurethane base film layer and the second polyurethane base film layer is 15 µm to 150 µm.

27. The protective film according to any one of claims 22 to 26, wherein the UV semi-cured layer is a semi-cured polyurethane acrylate layer.

28. The protective film according to claim 27, wherein semi-cured polyurethane acrylate layer comprises a polyurethane acrylate that comprises a double bond.

29. The protective film according to any one of claims 22 to 28, wherein a thickness of the UV semi-cured layer falls within a range of 30 µm to 150 µm.

30. The protective film according to any one of claims 22 to 29, wherein the adhesive layer is silicone adhesive or acrylate adhesive.

31. The protective film according to any one of claims 22 to 30, wherein a thickness of the adhesive layer is 10 µm to 50 µm.

32. The protective film according to any one of claims 22 to 31, wherein when a peel angle is 180°, peel strength of the adhesive layer is greater than 800 gf/25 mm.

33. The protective film according to any one of claims 22 to 32, wherein the protective film further comprises a dirt-resistant self-repair layer, and the dirt-resistant self-repair layer is disposed on a side that is of the first polyurethane base film layer and that is far away from the adhesive layer.

34. The protective film according to claim 33, wherein the dirt-resistant self-repair layer is a polyurethane coating doped with a fluoroether auxiliary and/or a fluorocarbon auxiliary, or a polyurethane acrylate coating doped with a fluoroether auxiliary and/or a fluorocarbon auxiliary.

35. The protective film according to claim 33 or 34, wherein a thickness of the dirt-resistant self-repair layer is 5 µm to 40 µm.

36. The protective film according to any one of claims 33 to 35, wherein pencil hardness of the dirt-resistant self-repair layer at a load of 500 g is greater than or equal to 1H, and a contact angle of the dirt-resistant self-repair layer is greater than or equal to 90°.

37. The protective film according to any one of claims 33 to 36, wherein a Young's modulus of the dirt-resistant self-repair layer is less than the Young's modulus of the first polyurethane base film layer.

38. The protective film according to any one of claims 22 to 37, wherein the protective film further comprises a base coating disposed between the UV semi-cured layer and the adhesive layer or between the second polyurethane base film layer and the adhesive layer, and the base coating is a silane-modified polyurethane acrylate coating.

39. The protective film according to any one of claims 22 to 38, wherein the protective film further comprises a lower release layer, and the lower release layer is disposed on a surface of a side that is of the adhesive layer and that is far away from the first polyurethane base film layer.

40. The protective film according to claim 39, wherein light transmittance of the lower release layer in a wavelength range of 10 nm to 400 nm is less than 10%.

41. The protective film according to any one of claims 22 to 40, wherein the protective film further comprises an upper protective layer, and the upper protective layer is located on the side that is of the first polyurethane base film layer and that is far away from the adhesive layer.

42. The protective film according to claim 41, wherein light transmittance of the upper protective layer in the wavelength range of 10 nm to 400 nm is less than 10%.

43. A production method for a protective film, wherein the production method comprises:
producing a first polyurethane base film on a PET carrier film, wherein the first polyurethane base film has Shore hardness falling within a range of 45D to 75D and a glass transition temperature Tg greater than or equal to 30°C;
producing a UV semi-cured layer on a surface of one side of the first polyurethane base film; and
producing an adhesive layer at the UV semi-cured layer.

44. The production method according to claim 43, further comprising: producing a dirt-resistant self-repair layer on a surface of a side that is of the first polyurethane base film and that is far away from the adhesive layer.

45. A production method for a protective film, wherein the production method comprises:
producing a first polyurethane base film layer on a PET carrier film, wherein the first polyurethane base film layer has Shore hardness falling within a range of 45D to 75D and a glass transition temperature Tg greater than or equal to 30°C;
producing a UV semi-cured layer on a surface of one side of the first polyurethane base film layer;
producing a second polyurethane base film at the UV semi-cured layer, wherein the second polyurethane base film layer has Shore hardness falling within a range of 45D to 75D and a glass transition temperature Tg greater than or equal to 30°C; and
producing an adhesive layer on the second polyurethane base film.

46. The production method according to claim 45, further comprising: producing a dirt-resistant self-repair layer on a surface of a side that is of the first polyurethane base film and that is far away from the adhesive layer.

47. An attachment method for a protective film, comprising:
in a yellow light working environment, attaching the protective film according to any one of claims 22 to 42 to a surface of a screen of an electronic device by using the adhesive layer, and then curing and molding, through UV light irradiation, the protective film into a shape that matches the screen.

48. The attachment method according to claim 47, wherein energy of the UV light irradiation falls within a range of 1,000 mj/cm² to 3,000 mj/cm².

49. A terminal, wherein the terminal comprises a display and the protective film according to any one of claims 1 to 16 or the protective film according to any one of claims 22 to 42 that is attached to the display screen, and the protective film is attached to a surface of the display by using the adhesive layer.

50. The terminal according to claim 49, wherein the display is a curved display or a flat display.

51. The terminal according to claim 49 or 50, wherein the display comprises cover glass, and if the display is a 3D large-angle curved display, the protective film matches the cover glass.

52. A terminal, wherein the terminal comprises a display and a protective film attached to the display, the protective film comprises an adhesive layer and a polyurethane base film layer disposed at the adhesive layer, the protective film is adhered to the display by using the adhesive layer, the polyurethane base film layer has Shore hardness falling within a range of 45D to 75D, a glass transition temperature Tg falling within a range of 30°C to 70°C, and a heat deflection temperature T_{deflection} falling within a range of 50°C to 90°C, and Tg<T_{deflection}.

53. A terminal, wherein the terminal comprises a display and a protective film attached to the display, the protective film comprises an adhesive layer adhered to the display, a totally cured UV semi-cured layer disposed at the adhesive layer, and a first polyurethane base film layer disposed at the totally cured UV semi-cured layer, the totally cured UV semi-cured layer is a polyurethane acrylate layer, and each of the polyurethane acrylate layer and the first polyurethane base film layer has Shore hardness falling within a range of 45D to 75D and a glass transition temperature Tg greater than or equal to 30°C.

54. The terminal according to claim 53, wherein the protective film further comprises a second polyurethane base film layer disposed between the adhesive layer and the totally cured UV semi-cured layer, and the second polyurethane base film layer has Shore hardness falling within a range of 45D to 75D and a glass transition temperature Tg greater than or equal to 30°C.
